(19) Europäisches Patentamt

European Patent Office

Office européen des brevets

(11) **EP 0 579 100 B1**

(12) **EUROPÄISCHE PATENTSCHRIFT**

(45) Veröffentlichungstag und Bekanntmachung des Hinweises auf die Patenterteilung:
**16.09.1998 Patentblatt 1998/38**

(51) Int Cl.6: **H04L 27/22**

(21) Anmeldenummer: **93110864.1**

(22) Anmeldetag: **07.07.1993**

(54) **Verfahren und Einrichtung zur Phasenkorrektur im Basisband eines PSK-Empfängers**

Method and apparatus for baseband phase correction in a PSK receiver

Procédé et dispositif de correction de phase en bande de base dans un récepteur "PSK"

(84) Benannte Vertragsstaaten:
**DE FR GB**

(30) Priorität: **14.07.1992 DE 4223121**

(43) Veröffentlichungstag der Anmeldung:
**19.01.1994 Patentblatt 1994/03**

(73) Patentinhaber: **Daimler-Benz Aerospace Aktiengesellschaft**
**81663 München (DE)**

(72) Erfinder:
• **Fink, Karl-Robert, Dipl.-Ing.**
**D-73312 Geislingen (DE)**
• **Klemt, Reiner, Dipl.-Ing.**
**D-89129 Langenau (DE)**
• **Biet, Bernhard, Dr.**
**D-89077 Ulm (DE)**

(74) Vertreter: **Fröhling, Werner Otto, Dr. et al**
**Daimler-Benz Aerospace AG**
**Patentabteilung**
**Sedanstrasse 10**
**89077 Ulm (DE)**

(56) Entgegenhaltungen:
**EP-A- 355 587**   **EP-A- 481 543**
**WO-A-91/02421**

**Beschreibung**

Die Erfindung betrifft ein Verfahren zur Trägerrückgewinnung bei der Demodulation von digital modulierten Signalen gemäß dem Oberbegriff des Patentanspruchs 1 oder des Patentanspruchs 2 sowie Anordnungen zum Ausführen des Verfahrens gemäß dem Oberbegriff der Patentansprüche 9 und 10.

Verfahren bzw. Anordnungen dieser Art werden im Bereich der Kommunikationstechnik beispielsweise in kooperativen bzw. nichtkooperativen digitalen Demodulatoren für digitale Signale mit harter oder weicher Tastung bzw. in Empfängern mit digitaler Zwischenfrequenzverarbeitung eingesetzt.

Digitale Übertragungsverfahren haben im Bereich der Kommunikationstechnik in den letzten Jahrzehnten stark an Bedeutung gewonnen. Die Gründe für die wachsende Verbreitung der digitalen Übertragungsverfahren sind der enorme Anstieg von bereits digital vorliegenden Quelldaten, der Trend zur digitalen Darstellung der ursprünglich analogen Quelldaten und nicht zuletzt die verstärkte Grundlagenforschung in der digitalen Signalverarbeitung. Die Übertragung von Nachrichten über grope Entfernungen kann grundsätzlich entweder mit Hilfe breitbandiger Kabel, über Satelliten oder über den ionosphärischen Kurzwellen-Funkkanal (HF-Kanal) erfolgen. In der Vergangenheit war der HF-Kanal primär zur Übertragung von analogen Quellsignalen vorgesehen. Durch technologische Fortschritte bei der Entwicklung leistungsfähiger digitaler Signalprozessoren und deren Einsatz in modernen Empfängern können jedoch heutzutage komplizierte adaptive Regelungs- und Signalverarbeitungsverfahren zu durchaus akzeptablen Preisen realisiert werden, die zum Empfang und zur Demodulation von digital modulierten Sendungen im Kurzwellenbereich notwendig sind. Der HF-Kanal gewinnt somit verstärkt an Bedeutung als Medium zur Nachrichtenübertragung von digital modulierten Sendungen. Die Vorteile einer Nachrichtenübertragung über Kurzwelle liegen unter anderem im relativ geringen Aufwand, im geringen Zeitaufwand für den Verbindungsaufbau und in der Möglichkeit eines Mobilbetriebs. Es ist auch ein Datenfunk zwischen bewegten Fahrzeugen durchführbar. Aufgrund der möglichen Bandbreitenersparnis und günstiger Rauscheigenschaften kommen im Kurzwellenbereich verstärkt von den digitalen Modulationsverfahren phasengetastete Verfahren ("MPSK-Verfahren": M-Phase-Shift-Keying mit M=2, 4, 8, 16,...) zur Anwendung.

Im nachrichtentheoretischen Sinn bedeutet die Modulation eine Abbildung der Information in eine Signalform, die für eine Übertragung von Nachrichten über größere Entfernungen geeignet ist. Die Information wird dabei einem Trägersignal aufgeprägt, das dann entweder als geführte Welle innerhalb eines Wellenleiters (Kabel) oder als abgestrahlte Welle zum Nachrichtenempfänger gelangt. Im Empfänger wird das modulierte Signal entweder direkt auf der Empfangsfrequenz oder bei einer Zwischenfrequenzlage demoduliert. Die Demodulation bedeutet dabei die bestmögliche Rückgewinnung der ursprünglichen Information und ist als inverser Vorgang zur Modulation aufzufassen. Man unterscheidet grundsätzlich analoge, d.h. zeit- und wertekontinuierliche von digitalen, d.h. zeit- und zustandsdiskrete Modulationsverfahren.

Im Gegensatz zu den analogen Modulationsverfahren werden bei den digitalen Verfahren binäre Zustände zur Modulation des Trägersignals verwendet. Die binären Zustände des Quelldatenstroms werden als diskrete Kennzustände des Trägersignals dargestellt. Man spricht dann von Umtastverfahren (Shift Keying), die entsprechend den analogen Modulationsverfahren in ASK (Amplitude-Shift-Keying), FSK (Frequency-Shift-Keying) und PSK (Phase-Shift-Keying) zu unterteilen sind. Die Schrittgeschwindigkeit bzw. der Schritttakt ("Symbolrate") $v_S$ des digitalen Modulationsverfahrens gibt die Anzahl der Kennzustandswechsel pro Sekunde an und hat die Maßeinheit Baud (Bd). Bei harter Um) tastung zwischen den Kennzuständen ist das Signal frei von Intersymbolinterferenzen, hat jedoch ein unendlich breites Frequenzband und ist somit für eine Übertragung weniger gut geeignet. Abhilfe kann durch weiche Tastung bei Beachtung der zweiten Nyquistbedingung erreicht werden. Diese besagt, daß die Maxima und die Nulldurchgänge einer Impulsfolge erhalten bleiben, wenn ihr Spektrum eine abfallende Flanke besitzt, die symmetrisch zur Grenzfrequenz verläuft. Mit Hilfe einer Impulsformung des modulierenden, komplexen Basisbanddatensignals durch ein spezielles Filter (Root-Raised-Cosine-Filter) und die Verwendung eines entsprechenden Optimalfilters im Empfänger können Intersymbolinterferenzen vermieden werden bei einer zusätzlichen Beschränkung der notwendigen Übertragungsbandbreite auf:

$$B_{DSB} = (1+\alpha) \cdot v_S \qquad\qquad (1)$$

mit dem Roll-off-Faktor $\alpha$ und der Symbolrate $v_S$.

Große Bedeutung haben heutzutage die PSK-Verfahren im Satellitenfunk, im Richtfunk und bei kabelgebundenen Kommunikationssystemen gefunden, und zwar aufgrund ihrer geringeren Empfindlichkeit gegenüber Rauschstörungen. Für die gleiche Fehlerwahrscheinlichkeit der demodulierten Daten bei jeweils vorausgesetzten Optimalempfängerstrukturen benötigen diese Verfahren einen geringeren Störabstand als konventionelle FSK- und ASK-Verfahren. Bei den PSK-Verfahren müssen beide Seitenbänder übertragen werden. Der Träger ist unterdrückt und muß bei der Demodulation durch spezielle Verfahren zurückgewonnen werden. Durch eine Erhöhung der Kennzustände (MPSK, M = 4, 8, 16...) kann eine Bandbreitenersparnis erfolgen. Zur Anwendung kommen in der Regel Verfahren der Bezugs- und der Differenzkodierung. Letztere haben den Vorteil, daß sie zur Demodulation nur eine AFC(Automatic-Frequency-Control)-Schaltung zur Schätzung der Trägerfrequenz benötigen. Die Zweiphasenumtastung, BPSK (Binary-Phase-Shift-Keying) oder B-DPSK (Binary-Differential-Phase-Shift-Keying), wird aufgrund ihres gropen Bandbreitenbedarfs seltener verwendet. In modernen Kommunikationssystemen kommen hauptsächlich höherstufige PSK-Verfahren zur Anwendung, die für die gleiche Übertragungsrate weniger Bandbreite benötigen. Alle mehrwertigen Verfahren müssen immer taktgebunden durchgeführt werden, damit die notwendige Serienparallelwandlung im Sender und die Parallelserienwandlung im Empfänger ermöglicht werden können. Bei der Umsetzung des Basisbanddatenstromes in den Symboldatenstrom wird häufig die Gray-Kodierung verwendet, damit bei Verfälschungen des Signals von einem Entscheidungsbereich in den anderen immer nur ein Bitfehler auftreten kann. Mit Hilfe eines MPSK-Modulators werden dann daraus die komplexen MPSK-Symbole $\exp(j2\pi k/M)$ gebildet, die die entsprechenden Phasenzustände definieren. Die notwendige Impulsformung zur weichen Tastung geschieht durch Filterung der komplexen MPSK-Symbole z.B. mit Hilfe eines Root-Raised-Cosine-Filters. Große Verbreitung finden bei den mehrstufigen Verfahren die quaternären Verfahren QPSK (Quaternary-Phase-Shift-Keying), die bei der gleichen Kanalbandbreite einer BPSK-Sendung doppelt so viele Daten pro Zeiteinheit übertragen können und dafür einen um 3 dB verbesserten Störabstand benötigen. Es sind auch Verfahren zur Vierphasenumtastung bekannt, bei denen die 180°-Sprünge aus zwei 90°-Phasensprüngen zusammengesetzt werden, die im Abstand der halben Schrittgeschwindigkeit stattfinden. Diese Offset-QPSK-Verfahren haben Vorteile bezüglich der optimalen Aussteuerung der Übertragungssysteme.

Bei herkömmlichen, analogen Empfängern erfolgen die erforderliche Hauptselektion und die Demodulation der Empfangssignale üblicherweise in einer niedrigeren Zwischenfrequenz(ZF)-Lage, da dort die notwendigen Filter in höherer Güte und die Demodulation mit geringerem Aufwand realisiert werden können. Das ZF-Signal liegt dabei als reelles Bandpaßsignal bei der Mittenfrequenz $f_{ZF}$ vor. Aufgrund der Spiegelfrequenzproblematik kann die ZF-Lage jedoch nicht beliebig erniedrigt werden. Eine digitale Demodulation z.B. von PSK-Sendungen im Kurzwellenbereich ist jedoch wegen der relativ geringen Bandbreite von $B_{PSK} < 5$ kHz mit vertretbarem Rechenaufwand denkbar. Mit Hilfe eines Quadraturempfängers ist es möglich, z.B. ein 0-ZF-PSK-Signal ("Basisbandsignal") mit sehr geringer Restträgerfrequenz $f_R$ zu erzeugen, das zur digitalen Weiterverarbeitung hervorragend geeignet ist.

Der Quadraturempfänger unterscheidet sich vom Synchronempfänger durch fehlende Synchronisation der Oszillatofrequenz $f_O$ mit der Empfangsfrequenz $f_{ZF}$. Das reelle Bandpaßsignal in der Zwischenfrequenzlage $f_{ZF}$ wird komplex in die 0-ZF-Lage gemischt. Dies geschieht durch Multiplikation des reellen Bandpaßsignals mit einem komplexen Zeiger

$$s_0(t) = \exp(-j\omega_0 t) = \cos(\omega_0 t) - j \cdot \sin(\omega_0 t). \qquad (2)$$

Im Spektralbereich entspricht dies einer Verschiebung des symmetrischen Bandpaßspektrums nach annähernd 0 Hz. Das Empfangssignal liegt dann als komplexes Basisbandsignal in O-ZF-Lage vor mit einer unvermeidlichen Restträgerfrequenz von

$$f_R = |f_0 - f_{ZF}| << B. \qquad (3)$$

Zur Vermeidung von Unsymmetrien und damit verbundenen Verzerrungen wird i.a. versucht die Restträgerfrequenz $f_R$ stets klein im Vergleich zur Tiefpaßbandbreite B zu halten, die ihrerseits aus Rauschgründen i.a. gleich der Signalbandbreite gewählt wird. Bei der Verschiebung des Bandpaßspektrums entstehen keine Spiegelfrequenzen. Die Hauptselektion wird beim O-ZF-Signal durch zwei Tiefpässe für je den Real- und Imaginärteil I, Q des komplexen Basisbandsignals vorgenommen (I: In-Phase-Signal; Q: Quadratur-Signal). Die Information zur Demodulation können aus dem komplexen Signalzeiger im Basisband abgeleitet werden. So wird z.B. bei der Amplitudendemodulation die Zeigerlänge des komplexen Basisbandzeigers verwendet. Der Vorteil dieses Verfahrens ist, daß die zu demodulierende Nachricht nahezu von der Trägerfrequenz befreit wurde, d.h. der sich langsam mit der Restträgerfrequenz $f_R$ drehende Signalzeiger trägt alle zur Demodulation der Nachricht notwendigen Informationen.

Das komplexe Basisbandsignal gelangt nach der Kanalentzerrung bzw. Filterung zu den Funktionseinheiten Trägerrückgewinnung und Schrittakt-Regeneration. Die Funktionseinheit zur Trägerrückgewinnung hat die Aufgabe, die Trägerfrequenz und -phase der Sendung zu schätzen und - nach Bestimmung der Frequenz - die Phase mit Hilfe eines Phasendrehgliedes zu eliminieren. Damit ist es möglich, das sich mit der Restträgerfrequenz $f_R$ drehende Koordinatensystem der I-Q-Basisbandsignale zum Stillstand zu bringen. Die Funktionseinheit der Schrittakt-Regeneration liefert Schätzwerte für die unbekannte Frequenz- und Phasenlage des Schrittaktes. Mit Hilfe des regenerierten Schrittaktes werden im Entscheider, der eine zusätzliche Interpolationseinheit vorgeschalten haben kann, aus den IQ-Signalen die Symbole abgeleitet. Die Symbole können dann synchron zum Schritttakt mit Hilfe einer Phasen- oder Augendiagrammdarstellung hinsichtlich ihrer Dekodierungsgüte beurteilt werden. Die I-Q-Signale können auch vor dem Entscheider mit Hilfe einer Augendiagrammdarstellung hinsichtlich des optimalen Entscheidungszeitpunktes untersucht werden.

Die Verfahren zur Trägerrückgewinnung und zur Schritttakt-Regeneration können entweder mit Hilfe rekursiver oder nichtrekursiver Verfahren realisiert werden. Die rekursiven Verfahren werden häufig auch als Feedback(FB)-Verfahren gekennzeichnet. Dabei wird das Maximum der Log-Likelihood-Funktion mit Hilfe der Nullstelle ihrer 1. Ableitung berechnet. Diese Vorgehensweise bildet sich in rekursiven Strukturen ab, bei denen mit Hilfe eines Fehlerdetektors eine Fehlergröße definiert wird, die innerhalb der Rekursion zu null optimiert wird. Auf diese Weise wird z.B. mit Hilfe eines Gradientenverfahrens die Nullstelle der 1. Ableitung der Log-Likelihood-Funktion der Trägerund Schrittaktschätzung gefunden. Die FB-Verfahren haben den Vorteil, daß sie auch geringfügige Änderungen der Trägerphase und des Symboltimings erfassen können.

Weiterhin können sie bei entsprechender Dimensionierung Frequenzoffsets und sogar zeitlich veränderliche Frequenzabweichungen ausregeln. Liegt der Initialisierungszustand in der Nähe eines instabilen Punktes der Fehlerdetektorkennlinie und ist außerdem die Rückstellkraft gering, so kann der Rastvorgang unter Umständen lange Zeit benötigen. Man bezeichnet diese Akquisitionsprobleme mit "Hangups".

Ein Überblick über die geläufigen rekursiven Verfahren zur Trägerrückgewinnung von MPSK-Signalen im Bandpaßbereich wird in dem Lehrbuch von J.G. Proakis: "Digital Communications", (McGraw-Hill Book Company, 1989) S. 312-318 gegeben. Vorgestellt werden der COSTAS-Loop, der Decision-Feedback-Loop und das Power-of-N-Verfahren und es werden die Rauscheinflüsse in diesen Loops genauer untersucht ("Loop" steht hier und im folgenden für "Regelkreis", der bei allen rekursiven Verfahren zwangsläufig erforderlich ist).

Alle vorgestellten Verfahren sind für reelle, analoge Bandpaßsignale konzipiert. Der Entscheider befindet sich innerhalb des Loops. Der Schritttakt wird als bekannt vorausgesetzt. Bei einer digitalen Realisierung der Trägerrückgewinnungsverfahren in einer Zwischenfrequenzlage (reelles Bandpaßsignal) steigt der erforderliche Rechenleistungsaufwand. Die Verfahren haben eine starke Pegelabhängigkeit. Das Akquisitionsverhalten wird durch die sinusförmige Phasendetektorkennlinie geprägt. Bei einer digitalen Realisierung der Verfahren ist ein numerisch kontrollierter Oszillator (NCO=Numerical-Controlled-Oscillator) mit sin- und cos-Tabelle erforderlich.

In dem Buch von E.A. Lee, D.G. Messerschmitt: "Digital Communication", (Kluwer Academic Publishers, Boston - London, 1988) S. 548-558 werden digitale rekursive Verfahren zur Trägerrückgewinnung von PSK-Sendungen vorgestellt, die im äquivalenten Tiefpaßbereich arbeiten. Zwei Techniken werden näher beleuchtet: Das Decision-Directed-Trägerrückgewinnungsverfahren benötigt die Kenntnis des exakten Symbol-Timings. Das Power-of-N-Trägerrückgewinnungsverfahren arbeitet mit Hilfe einer $(\ )^N$-Nichtlinearität zur Erzeugung einer spektralen Komponente bei der Trägerfrequenz. Das Decision-Directed-Verfahren stellt eine digitale Variante des bereits erwähnten COSTAS-Loops in O-ZF-Lage dar, die allerdings ohne Tiefpaßfilter im Loop auskommt. Man erkennt in der dargestellten Struktur die Signalverknüpfung zur Beseitigung der Datenabhängigkeit und die Einbeziehung des Entscheiders in den Loop. Bei dem Power-of-N-Verfahren rastet der Loop auf die N-te Oberwelle der Trägerfrequenz.

Bei beiden Verfahren existiert eine starke Pegelabhängigkeit. Der entscheidungsgeführte Loop benötigt einen mittleren bis guten Signal-Rausch-Abstand des Eingangssignals. Beide Loops haben eine sinusförmige Phasendetektorkennlinie. Die entscheidungsgeführten Verfahren zur Trägerrückgewinnung haben Probleme bei schwierigen Übertragungskanälen (z.B. HF-Kanal).

In dem Buch von B. Sklar: "Digital Communications - Fundamentals and Applications", (Prentice-Hall International Editions, 1988,) S. 447-453 wird der klassische COSTAS-Loop zur Trägerrückgewinnung von reellen BPSK-Bandpaßsignalen vorgestellt. Von besonderer Bedeutung sind die beiden Tiefpaßfilter im Loop zur Unterdrückung der doppelten Trägerfrequenz. Die Einflüsse des Schleifenfilters und die Auswirkungen der Ordnung des Regelfilters auf die Ausregeleigenschaften des Loops bei einer Störung am Eingang des Loops werden aufgezeigt.

Der klassische analoge COSTAS-Loop ist für eine Trägerrückgewinnung von BPSK-Signalen im Bandpaßbereich geeignet. Es sind zwei Tiefpaßfilter im Loop erforderlich. Der COSTAS-Loop hat eine quadratische Pegelabhängigkeit. Das Akquisitionsverhalten des Loops wird durch die sinusförmige Phasendetektorkennlinie beeinflußt. Für höherstufige PSK-Verfahren sind Modifikationen der Struktur erforderlich, die einen erheblichen Realisierungsaufwand darstellen.

Die wesentlichen Nachteile der in den drei Literaturstellen beschriebenen klassischen bzw. modifizierten COSTAS-Loop sind:

- feste Pegelabhängigkeit der Phasendetektorkonstante $K_D = x^M v_o^M$ (bei MPSK)
- sinusförmige Detektorkennlinie $\varepsilon_k = x^M v_o^M \sin(M\Delta\varphi)$
- ungünstiges Akquisitionsverhalten und Hangup-Verhalten aufgrund der sinusförmigen Detektorkennlinie
- geringer Linearitätsbereich
- optimaler Demodulator nur bei tanh( )-Nichtlinearität im I-Pfad bei BPSK
- keine feste Struktur für MPSK-Verfahren.

In dem Artikel von J.A. Bisson, R.W. Donaldson: "Characterization and Simulation of a Multi-Sampling Digital Tanlock-Loop; in: Proceedings of the IEEE Pacific Rim Conference on Communication, Computer and Signal Processing, 1.-2.6.1989, Seiten 354-358 wird ein hybrider Tanlock-Loop zur Trägerrückgewinnung von MPSK-Signalen vorgestellt. Der hybride Tanlock-Loop besteht aus einem analogen Front-End zur Abmischung in eine Zwischenfrequenzlage und zwei taktgesteuerten Analog-Digital-Wandlern. Die Information zur Taktsteuerung der A/D-Wandler wird mit Hilfe eines speziellen Phasendetektors, einem Regelfilter und einer Taktgenerierungseinheit gewonnen. Der Digitalteil der Trägerrückgewinnung arbeitet somit mit variablem Abtasttakt. Die Datenabhängigkeit wird durch eine Multiplikation der Phase mit dem Faktor M (M-PSK) und einer Modulo-$2\pi$-Kennlinie beseitigt. Zur Erzeugung von ausreichend vielen Abtastwerten pro Symbol muß der NCO bei einer Ruhe-Kreisfrequenz $\omega_o$ arbeiten. Von Vorteil für das Akquisitionsverhalten ist die sägezahnförmige Phasendetektorkennlinie mit großem Linearitätsbereich. Der Tanlock-Loop arbeitet ohne Pegeleinkopplung.

Beim Tanlock-Loop ist ein analoges Front-End zur Erzeugung des Quadratursignals erforderlich. Daraus ergeben sich Probleme durch die Genauigkeit des 90°-Phasenschiebers, durch die Offset-Anteile der beiden Mischer und die Unterschiede der beiden Filter. Der Digitalteil arbeitet mit variablem Abtasttakt. Dies ist bei DSP-Anwendungen (DSP: digitaler Signalprozessor) mit Parallelverarbeitung von Nachteil. Der Tanlock-Loop arbeitet in O-ZF-Lage, die Berechnung der arctan-Funktion geschieht dabei mit Hilfe einer Tabelle. Daraus resultieren häufig Phasenungenauigkeiten.

Treten bei der Signalübertragung schnellere Trägerfrequenzschwankungen auf, wie dies z.B. im Kurzwellenbereich mit Schwankungen \5 Hz häufig der Fall ist, werden bei der Demodulation robuste Verfahren zur Trägerrückgewinnung benötigt, die keine Datenunterstützung benötigen (NDA: Non-Data-Aided) und die auch ohne Kenntnis des Schrittakt-Timings funktionieren. Schrittaktabhängige Verfahren zur Trägerrückgewinnung wie z.B. das erwähnte Tanlock-Loop-Verfahren , werden durch die erforderliche Schrittakt-Regeneration beeinflußt. Dies führt bei größeren Trägerfrequenzschwankungen zu Akquisitionsproblemen und Unsicherheiten in der Stabilität der Algorithmen. Durch die Verwendung von schrittaktunabhängigen Verfahren können diese Nachteile vermieden werden. Zu den schrittaktunabhängigen Trägerrückgewinnungsverfahren gehören das bereits erwähnte COSTAS-Loop-, das Squaring-Loop- und das Quadrupling-Loop-Verfahren. Diese Verfahren werden vor allem in analogen PSK-Empfängern für reelle Bandpaßsignale verwendet.

Die Aufgabe der Erfindung besteht darin, zum einen ein robustes Verfahren zur rekursiven Trägerrückgewinnung anzugeben, das ohne Kenntnis des Schrittakt-Timings auskommt und nicht datenunterstützt arbeitet und das insbesondere den Anforderungen beim Empfang von digital modulierten Signalen im Kurzwellenbereich gerecht wird. Zum andern sollen Anordnungen zum Durchführen eines solchen Verfahrens angegeben werden, die besonders einfach in ihrem Aufbau sind.

Die erfindungsgemäße Lösung dieser Aufgabe ist in bezug auf das zu schaffende Verfahren durch die kennzeichnenden Merkmale des Patentanspruchs 1 oder des Patentanspruchs 2 angegeben und in bezug auf die zu schaffenden Anordnungen durch die kennzeichnenden Merkmale der Patentansprüche 9 und 10. Die übrigen Ansprüche enthalten vorteilhafte Ausund Weiterbildungen des erfindungsgemäßen Verfahrens (Ansprüche 3 bis 8) und der erfindungsgemäßen Anordnungen (Ansprüche 11 bis 17) sowie bevorzugte gerätemäßige Verwendungen der Erfindung (Ansprüche 18 und 19).

Das erfindungsgemäße Verfahren sieht zur Trägerrückgewinnung bei der Demodulation von digital modulierten Signalen folgende Verfahrensschritte vor (Alternative I):

- das digital modulierte Signal wird in ein digitales, gefiltertes und mit einem Restträger zunächst unbekannter Frequenz $f_R$ und Phase $z_R$ behaftetes komplexes Basisbandsignal $x_k$ konvertiert;

- das so erzeugte Basisbandsignal $x_K$ wird mit einem Referenzträger $v_k$ der Frequenz $f_o$ und der Phase $z_o$ komplex quadraturgemischt und die so erzeugten und in karthesischer Koordinatendarstellung vorliegenden In-Phase- und Quadratur-Signale I, Q werden einem Entscheider zur weiteren Auswertung zugeleitet;

- in einem rekursiven Regelprozeß werden zunächst die In-Phase- und Quadratur-Signale I, Q von der karthesischen Koordinatendarstellung in eine durch den Betrag $A_k$ und die Phase $z_k$ dieser Signale I, Q charakterisierte Polarkoordinatendarstellung transformiert, anschließend wird aus der so erzeugten Phase $z_k$ ein modulationssignalunabhängiges ("datenunabhängiges") Phasenfehlersignal $w_k$ abgeleitet und schließlich wird aus diesem Phasenfehlersignal $w_k$ ein Regelsignal $c_k$ abgeleitet, mit dem die Frequenz $f_o$ und die Phase $z_o$ des Referenzträger $v_k$ sukzessive mit der Frequenz $f_R$ und Phase $z_R$ des Restträgers des Basisbandsignals $x_k$ in Übereinstimmung gebracht werden (Alternative I)

oder alternativ hierzu folgende Verfahrensschritte (Alternative II):

- das digital modulierte Signal wird in ein digitales, gefiltertes und mit einem Restträger zunächst unbekannter Frequenz $f_R$ und Phase $z_R$ behaftetes komplexes Basisbandsignal $x_k$ konvertiert;

- das in karthesischer Koordinatendarstellung vorliegende Basisbandsignal $x_k$ wird in eine durch den Betrag $A_{xk}$ und die Phase $z_{xk}$ des Basisbandsignals $x_k$ charakterisierte Polarkoordinatendarstellung transformiert, anschließend wird die so erzeugte Phase $z_{xk}$ mit einer Referenzphase $z_o$ verglichen und die resultierende Phasendifferenz $Dz$ zwischen beiden Phasen $z_{xk}$, $z_o$ gebildet, die einem Entscheider zur weiteren Verarbeitung zugeleitet wird;

- in einem rekursiven Regelprozeß wird zunächst aus der Phasendifferenz $Dz$ zwischen den beiden Phasen $z_{xk}$, $z_o$ ein modulationssignalunabhängiges ("datenunabhängiges") Phasenfehlersignal $w_k$ abgeleitet und anschließend wird aus diesem Phasenfehlersignal $w_k$ ein Regelsignal abgeleitet, mit dem die Referenzphase $z_o$ sukzessive mit der Phase $z_{xk}$ des Basisbandsignals $x_k$ in Übereinstimmung gebracht wird (Alternative II).

Eine erste erfindungsgemäße Anordnung zur Trägerrückgewinnung bei der Demodulation von digital modulierten Signalen zum Durchführen des erfindungsgemäßen Verfahrens (Alternative I) ist dadurch gekennzeichnet,

- daß ein komplexer Quadraturmischer (QM) vorgesehen ist;
- daß der komplexe Quadraturmischer (QM) eingangsseitig zum einen an ein Filter (F1) für das komplexe Basisbandsignal und zum anderen an den Ausgang eines in Frequenz $f_o$ und Phase $z_o$ steuerbaren Referenzoszillators (NCO) angeschlossen ist;
- daß der In-Phase- und der Quadratur-Ausgang des komplexen Quadraturmischers (QM) mit einem Entscheider verbunden ist;
- daß zur Durchführung des rekursiven Regelprozesses eine Regelschleife realisiert ist, indem zum einen der In-Phase- und der Quadratur-Ausgang des komplexen Quadraturmischers (QM) zusätzlich mit dem Eingang eines Koordinatentransformators (KT) zur Signaltransformation von einer karthesischen Koordinatendarstellung in eine durch Betrag $A_k$ und Phase $z_k$ charakterisierte Polarkoordinatendarstellung verbunden ist und zum anderen der die Phase $z_k$ führende Ausgang des Koordinatentransformators (KT) über eine Einheit (MP1, Mod 2p) zur Befreiung der Phase $z_k$ von der Modulationssignalabhängigkeit ("Datenabhängigkeit") sowie über einen nachgeschalteten Regelfilter (RF) mit dem Steuereingang des Referenzoszillators (NCO) verbunden ist.

Ein zweite erfindungsgemäße Anordnung zur Trägerrückgewinnung bei der Demodulation von digital modulierten Signalen zum Durchführen des erfindungsgemäßen Verfahrens (Alternative II) ist dadurch gekennzeichnet,

- daß einem Filter (F1) für das komplexe Basisbandsignal ein Koordinatentransformator (KT) zur Signaltransformation von einer karthesischen Koordinatendarstellung in eine durch Betrag $A_{xk}$ und Phase $z_{xk}$ charakterisierte Polarkoordinatendarstellung nachgeschaltet ist;
- daß der die Phase $z_{xk}$ führende Ausgang des Koordinatentransformators (KT) mit einem Eingang eines Subtrahieres (SUB) verbunden ist;
- daß der andere Eingang des Subtrahieres (SUB) mit dem Ausgang eines Phasenakkumulators (AKKU) verbunden ist und der Ausgang des Subtrahieres (SUB) mit einem Entscheider verbunden ist;
- daß zur Durchführung des rekursiven Regelprozesses eine Regelschleife realisiert ist, indem der Ausgang des Subtrahierers (SUB) zusätzlich über eine Einheit (MP1, Mod 2p) zur Befreiung der am Ausgang des Subtrahierers (SUB) anliegenden Phasendifferenz $Dz$ von der Modulationssignalabhängigkeit ("Datenabhängigkeit") sowie über einen nachgeschalteten Regelfilter (RF) mit dem Eingang des Phasenakkumulators (AKKU) verbunden ist.

In einer bevorzugten Ausbildung der Erfindung ist vorgesehen, daß die Koordinatentransformation der In-Phase- und Quadratur-Signale I, Q (Alternative I) bzw. des Basisbandsignals $x_k$ (Alternative II) von der karthesischen Koordinatendarstellung in die Polarkoordinatendarstellung mit Hilfe des an sich bekannten CORDIC-Algorithmus durchgeführt wird (vgl. z.B.: Yu Hen Hu: "The Quantization Effects of the CORDIC Algorithm"; in: IEEE TRANSACTIONS ON SIGNAL PROCESSING, Vol. 40, No. 4, April 1992, S. 834-844). Anders ausgedrückt, ist bei dieser bevorzugten Ausbildung der Erfindung vorgesehen, daß der Koordinatentransformator (KT) nach dem CORDIC-Algorithmus arbeitet. Die Erfindung zeichnet sich durch folgende Vorteile aus:

- feste Trägerrückgewinnungsstruktur, die bei MPSK-modulierten Signalen unabhängig von M ist;
- zur Erzielung eines adaptiven Verhaltens der Regelschleife ist eine gezielte Pegeleinkopplung möglich;
- lineare Phasendetektorlinie;
- besseres Akquisitions- und Hangup-Verhalten als der oben beschriebene COSTAS-Loop (z.B. um den Faktor 2 größerer Fangbereich bzw. größere Rückstellkraft im instabilen Arbeitspunkt);
- bessere Stabilität als der COSTAS-Loop;

- feste Abtastfrequenz;
- vollständig digital aufgebaute Regelschleife;
- zur Trägerrückgewinnung wird nur ein A/D-Wandler (vor der Regelschleife) benötigt im Gegensatz zu dem beschriebenen Tanlock-Loop, die zwei A/D-Wandler braucht;
- Kenntnis des Schrittakt-Timings nicht notwendig;
- keine Datenunterstüzung erforderlich.

Im folgenden wird die Erfindung anhand der Figuren näher erläutert. Es zeigen:

FIG. 1   eine erste Ausführungsform der erfindungsgemäßen Anordnungen zum Ausführen des erfindungsgemäßen Verfahrens bei MPSK-modulierten Signalen mit einem Koordinatentransformator in der Regelschleife (Alternative I);

FIG. 2   eine zweite Ausführungsform der erfindungsgemäßen Anordnungen zum Ausführen des erfindungsgemäßen Verfahrens bei MPSK-modulierten Signalen mit einem der Regelschleife vorgeschalteten Koordinatentransformator (Alternative II);

FIG. 3   eine erste Weiterbildung der Anordnung gemäß FIG. 1 mit einer zusätzlichen Pegeleinkopplung zur Erzielung eines adaptiven Verhaltens der Regelschleife;

FIG. 4   eine zweite Weiterbildung gemäß FIG. 1 mit einer zusätzlichen Pegeleinkopplung zur Erzielung eines adaptiven Verhaltens der Regelschleife, die zur Trägerrückgewinnung bei QAM-modulierten Signalen verwendet werden kann;

FIG. 5   eine dritte Weiterbildung der Anordnung gemäß FIG. 1 mit einer zusätzlichen Pegeleinkopplung und einer zusätzlichen Schaltung zur automatischen Frequenzkontrolle;

FIG. 6   eine erste Weiterbildung der Anordnung gemäß FIG. 2 mit einer zusätzlichen Pegeleinkopplung und einer zusätzlichen Schaltung zur automatischen Frequenzkontrolle.

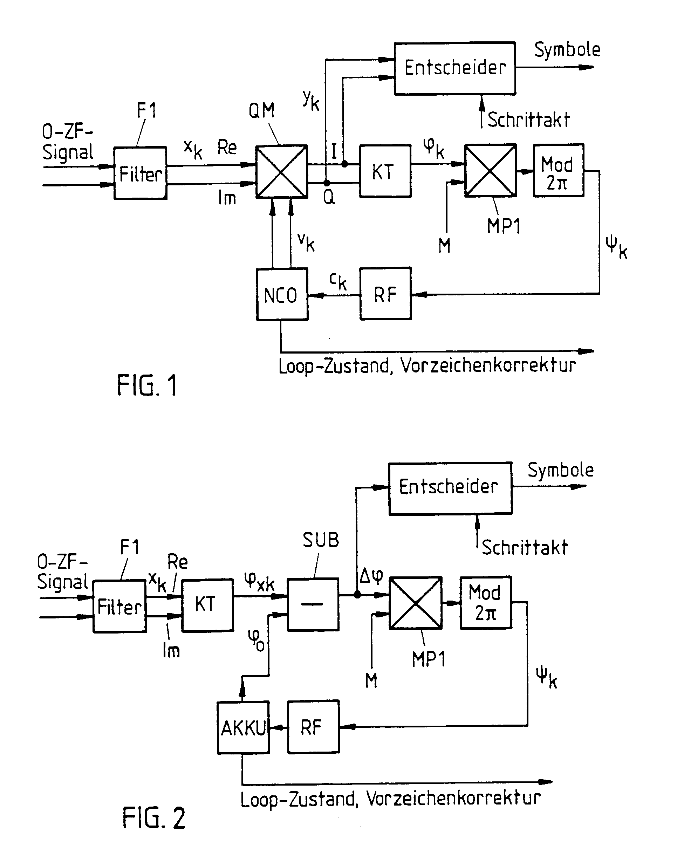

Die Anordnung zur Trägerrückgewinnung in FIG. 1 ist in Form einer Regelschleife aufgebaut und eignet sich zur Ausführung des erfindungsgemäßen Verfahrens nach Alternative I.

Das mit einem Restträger der Frequenz $f_R$ und Phase $\varphi_R$ behaftete Basisbandsignal ("O-ZF-Signal") wird auf einen Filter F1, z.B. einen Optimal- oder Hauptselektionsfilter gegeben. Das aus Realteil Re und Imaginärteil Im bestehende komplexe gefilterte Signal $x_k$ wird in einem Quadraturmischer QM mit den (jeweils um 90° gegeneinander phasenverschobenen) Ausgangssignalen $v_k$ eines numerisch kontrollierten Referenzoszillators NCO ("Numerical-Controlled-Oscillator") komplex quadraturgemischt. Die so erzeugten In-Phase- und Quadratur-Ausgangssignale I und Q des Quadraturmischers QM, die zusammen das komplexe Ausgangssignal $y_k$ bilden, werden einem Entscheider zur weiteren Auswertung zugeleitet. Dem Entscheider wird ferner von einer (nicht gezeigten) Schrittakt-Regenerierungseinheit der ermittelte Schrittakt der zu demodulierenden Sendung zugeleitet. Am Ausgang des Entscheiders erscheinen bei richtiger Schätzung der Restträgerfrequenz, -phase und des Schrittaktes eine Folge von Symbolen, die anschließend in einem (nicht gezeigten) Dekodierer dekodiert wird. Die dekodierten Daten werden anschließend einer (ebenfalls nicht gezeigten) Auswerteeinheit des Demodulators zugeführt.

Die I- und Q-Signale des Quadraturmischers QM werden ferner der bereits erwähnten Regelschleife zugeführt, und zwar einem Koordinatentransformator KT, der die in karthesischen Koordinaten dargestellten I- und Q-Signale in eine durch Betrag $A_k$ und Phase $\varphi_k$ charakterisierten Polarkoordinatendarstellung transformiert und der zu dieser Transformation z.B. den an sich bekannten CORDIC-Algorithmus verwendet. Der die Phase $\varphi_k$ führende Ausgang des Koordinatentransformators KT ist mit einer Einheit verbunden, die die Phase $\varphi_k$ von der Modulationssignalabhängigkeit ("Datenabhängigkeit") befreit. Sie besteht aus einem Multiplizierer MP1, in dem die Phase $\varphi_k$ mit M multipliziert wird, und einer nachgeschalteten Modulo-$2\pi$-Kennlinie (Mod-$2\pi$), wobei der Faktor M = 2, 4, 8, 16.... die Wertigkeit der verwendeten MPSK-Modulation angibt. Am Ausgang dieser Einheit erscheint das modulationssignalunabhängige Phasenfehlersignal $\psi_k$, das einem Regelfilter zugeleitet wird. Die Auslegung dieses Filters prägt der Regelschleife die Dynamik und das Rauschverhalten auf. Am Ausgang des Regelfilters RF erscheint ein von dem Phasenfehlersignal $\psi_k$ abgeleitetes Regelsignal $c_k$, das auf den Steuereingang des Referenzoszillators NCO gegeben wird und dessen Frequenz $f_o$ bzw. Phase $\varphi_o$ nachstellt. Durch diesen rekursiven Nachstellprozeß werden sukzessive die Frequenz $f_o$ und die Phase $\varphi_o$ des Referenzoszillators NCO mit der Frequenz $f_R$ und der Phase $\varphi_R$ des Restträgers des Basisbandsignals $x_k$ in Übereinstimmung gebracht. Vom Referenzoszillator NCO führt ferner eine Überwachungsleitung zu einer (nicht gezeigten) Kontrolleinheit, die den Zustand der Regelschleife ("Loop-Zustand") kontrolliert und gegebenenfalls eine Vorzeichenkorrektur im Ausgangsdatenstrom des Entscheiders veranlaßt.

Die Anordnung zur Trägerrückgewinnung in FIG. 2 unterscheidet sich von der in FIG. 1 dadurch, daß der Koordinatentransformator KT nicht in der Regelschleife angeordnet ist, sondern dieser vorgeschaltet ist. Diese Anordnung eignet sich zur Ausführung des erfindungsgemäßen Verfahrens nach Alternative II.

Der die Phase $\varphi_{xk}$ des gefilterten komplexen Basisbandsignals $x_k$ führende Ausgang des Koordinatentransformators KT ist mit dem einen Eingang eines Subtrahierers SUB verbunden, dessen anderer Eingang mit dem Ausgang eines Phasenakkummulators AKKU verbunden, der eine Referenzphase $\varphi_o$ erzeugt.

In dem Subtrahierer SUB wird die Differenz $\Delta\varphi$ zwischen den beiden anliegenden Phasen $\varphi_{xk}$ und $\varphi_o$ gebildet und anschließend einem Entscheider zugeleitet, der mit Hilfe des ihm ebenfalls zugeleiteten Schrittaktes aus dem Phasendifferenzsignal $\Delta\varphi$ die Folge der Symbole bestimmt, die dann dem (nicht gezeigten) Dekodierer zur weiteren Verarbeitung zugeleitet werden.

Das Phasendifferenzsignal $\Delta\varphi$ des Subtrahierers SUB wird ferner dem Regelkreis zugeleitet, und zwar der bereits in FIG. 1 beschriebenen Einheit MP1, Mod-$2\pi$, die die Phasen-differenz $\Delta\varphi$ von der Modulationssignalabhängigkeit, d.h. Datenabhängigkeit befreit.

Das derart erzeugte modulationssignalunabhängige Phasenfehlersignal $\psi_k$ wird einem Regelfilter RF zugeleitet, der ein entsprechendes Regelsignal auf den Eingang des Phasenakkumulator AKKU gibt, mit dem die Phase $\varphi_o$ des Phasenakkumulators nachgestellt wird. Durch diesen rekursiven Nachstellprozeß wird sukzessive die Phase $\varphi_o$ des Phasenakkumulators AKKU mit der Phase $\varphi_{xk}$ des Basisbandsignals $x_k$ in Übereinstimmung gebracht. Von dem Phasenakkumulator AKKU geht ferner eine Steuerleitung zu einer (nicht gezeigten) Kontrolleinheit, in der der Zustand der Regelschleife überwacht wird und gegebenenfalls eine Vorzeichenkorrektur im Ausgangsdatenstrom des Entscheiders vorgenommen wird. Das Besondere bei dieser Ausführungsform besteht darin, daß der Regelkreis vollständig in der Phasenebene arbeitet.

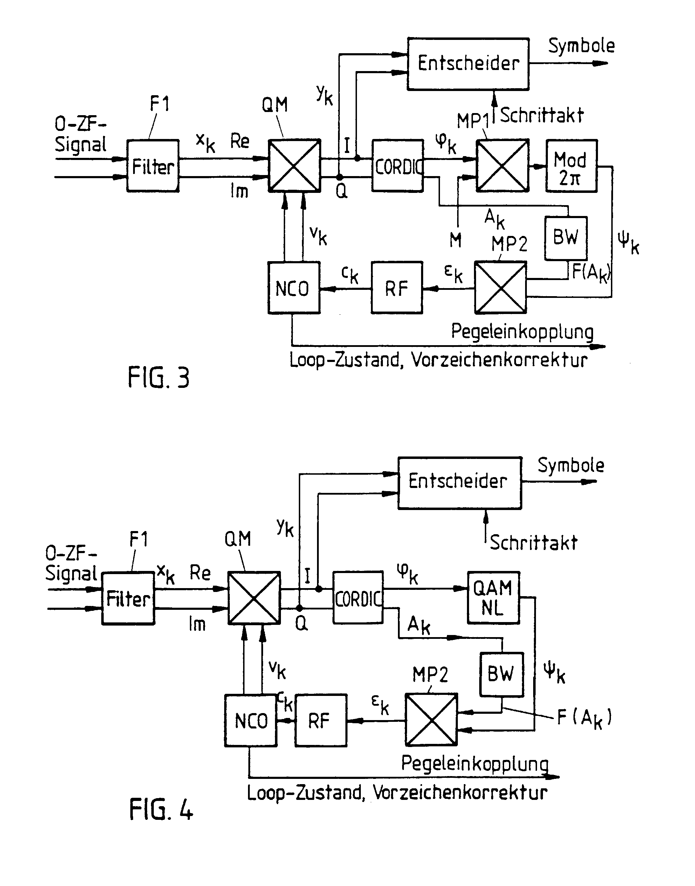

Die Anordnung zur Trägerrückgewinnung in FIG. 3, die eine besonders vorteilhafte erste Weiterbildung der Anordnung gemäß FIG. 1 darstellt, unterscheidet sich von dieser dadurch, daß zur Erzielung eines adaptiven Verhaltens der Regelschleife zusätzlich eine Pegeleinkopplung vorgesehen ist (bezüglich der Gemeinsamkeiten im Aufbau der Anordnungen sei im übrigen auf die Figurenbeschreibung zu FIG. 1 verwiesen).

Der Koordinatentransformator arbeitet bei dieser Anordnung nach dem an sich bekannten CORDIC-Algorithmus und liefert ausgangsseitig sowohl die Phase $\varphi_k$ als auch den Betrag $A_k$ des komplexen Ausgangssignal $y_k$ des komplexen Quadraturmischers QM. Während die Phase $\psi_k$ in der Einheit (MP1, Mod-$2\pi$) von der Modulationssignalabhängigkeit befreit wird, wird der Betrag $A_k$ über eine Bewertungseinheit BW einem Multiplizierer MP2 zugeleitet und dort der bewertete Betrag $F(A_K)$ mit dem modulationssignalunabhängigen Phasenfehlersignal $\psi_k$ multipliziert. Das so erzeugte Fehlersignal $\varepsilon_k$ am Ausgang des Multiplizierers MP2 wird anschließend dem Regelfilter RF zugeleitet, das in Abhängigkeit von Fehlersignal $\varepsilon_k$ ein Regelsignal $c_k$ erzeugt, das auf den Steuereingang des Referenzoszillators NCO gegeben wird.

Die Verwendung des CORDIC-Algorithmus bei der Koordinatentransformation führt - wie die Anordnung in FIG. 3 zeigt - zu Ausführungsformen des erfindungsgemäßen Verfahrens bzw. der erfindungsgemäßen Anordnungen, die den Anforderungen insbesondere beim Empfang von MPSK-Signalen im Kurzwellenbereich gerecht werden und die im Sinne des Maximum-Like-lihood(ML)-Kriteriums als Quasi-Optimalstrukturen aufgefaßt werden können. Zur Funktionsweise der Anordnung gemäß FIG. 3 ist noch folgendes anzumerken:

Das komplexe I-Q-Signal $y_k$ erhält man durch komplexe Multiplikation des Eingangssignals $x_k$ mit dem Referenz zeiger $v_k$:

$$y_k = x_k \cdot v_k = v_0 \cdot x_B \cdot e^{j([\omega_R - \omega_0]kT_A + [\varphi_R - \varphi_0] + \gamma_i)}. \tag{4}$$

mit $\omega_R$ = Restträgerkreisfrequenz, $\omega_O$ = Referenzsignalkreisfrequenz, $T_A$ = Abtastzeit und $\gamma_i$ = Datensignal = $2\pi i/M$; i = 1, 2, 3...M.

Mit Hilfe des CORDIC-Algorithmus erfolgt eine Wandlung der karthesischen Koordinaten in Polarkoordinaten. Für die Phase $\varphi_k$ und den Betrag $A_k$ des I-Q-Signals erhält man die Ausdrücke:

$$\varphi_k = \arctan\left[\frac{\mathrm{Im}(y_k)}{\mathrm{Re}(y_k)}\right] = \gamma_i + (\omega_R - \omega_0)kT_A + \varphi_R - \varphi_0 \tag{5}$$

und

$$A_k = \sqrt{\text{Re}(y_k)^2 + \text{Im}(y_k)^2} = v_0 \cdot x_B. \tag{6}$$

Die Modulationssignalabhängigkeit der Phase $\varphi_k$ wird durch eine Multiplikation mit dem Faktor M und eine nachfolgende Modulo-$2\pi$-Kennlinie beseitigt und ergibt das modulationssignalunabhängige Phasenfehlersignal $\psi_k$ mit:

$$\psi_k = \text{mod}\Big|_{2\pi} \left[ M \cdot \gamma_i + M \cdot (\omega_R - \omega_0) k T_A + M \cdot (\varphi_R - \varphi_0) \right] \tag{7}$$
$$= M \cdot (\omega_R - \omega_0) k T_A + M \cdot (\varphi_R - \varphi_0)$$

Durch das gezielte Einbringen des Betrags $A_k$ (und damit der Signalamplitude $x_k$) in das Phasendetektorsignal $\varepsilon_k$ kann ein adaptives Verhalten der Regelschleife durch die Signalabhängigkeit erreicht werden. Man erhält bei einer funktionalen Wichtung des Betrags $A_k$ für das Fehlersignal

$$\varepsilon_k = F(A_k) \cdot M \cdot (\omega_R - \omega_0) k T_A + F(A_k) \cdot M \cdot (\varphi_R - \varphi_0). \tag{8}$$

Bei der vorliegenden Regelschleife mit einer Koordinatentransformation mit Hilfe des CORDIC-Algorithmus ("CORDIC-Loop") hat man einen zusätzlichen Freiheitsgrad in der gezielten Gestaltung der Pegeleinkopplung. Die Funktion F( ) ist grundsätzlich willkürlicher Art. Ein optimales Schätzverhalten des CORDIC-Loops erhält man mit:

$$F(A_k) = (A_k)^n \text{ mit } n \in [0,2]. \tag{9}$$

Für $n = 0$ wird der Pegeleinfluß im Loop vollständig beseitigt. Sowohl das dynamische Verhalten des Loops als auch dessen Akquisitionsverhalten sind dann unabhängig von möglichen Änderungen des Eingangspegels. Durch die lineare ($n = 1$) oder quadratische ($n = 2$) Pegeleinkopplung erhält der Loop ein adaptives Verhalten bezüglich der Loopbandbreite. Bei abnehmendem Pegel schnürt sich der Loop selbst zu. Der CORDIC-Loop bietet auch die Möglichkeit, mit Hilfe spezieller Optimierungsverfahren den Signalpegel bei der Akquisitionsphase so zu manipulieren, daß ein schnelleres Rasten des Loops erfolgen kann. Bei gerastetem CORDIC-Loop erhält man für das Phasenfehlersignal den Ausdruck:

$$\varepsilon_k = A_k^n \cdot M \cdot \underbrace{(\varphi_R - \varphi_0)}_{\Delta\varphi}. \tag{10}$$

Es ergibt sich eine Modulo-$2\pi$/M-Sägezahnkennlinie. Der große Linearitätsbereich des CORDIC-Phasendetektors führt zu besserem Akquisitionsverhalten, größeren Fangbereichen, größeren Ausrastbereichen (Pull-out-Bereiche) und günstigerem Verhalten bezüglich Hangups bei sonst gleichem optimalen Verhalten der Trägerrückgewinnung. Ein weiterer Vorteil des CORDIC-Loops ist die Strukturunabhängigkeit bei höherstufigen MPSK-Verfahren. Die Beseitigung des Modulationssignal- bzw. Dateneinflusses im Regelsignal erfolgt bei den MPSK-Verfahren durch die Multiplikation mit dem Faktor M. Bei der Implementierung der Trägerrückgewinnungsalgorithmen nach dem CORDIC-Loop-Verfahren mit Hilfe digitaler Signalprozessoren erfolgt die Multiplikation mit dem Faktor M durch eine einfache Shift-Operation und die Darstellung der Modulo-$2\pi$-Kennlinie durch die Zweierkomplementdarstellung des Zahlenbereiches und eine entsprechende Normierung im Referenzoszillator NCO. Unter Berücksichtigung der Akquisitionseigenschaften und anderer Randbedingungen ist der CORDIC-Loop global gesehen daher günstiger als der weiter oben beschriebene COSTAS-Loop.

Die Anordnung zur Trägerrückgewinnung in FIG. 4 stellt eine andere Weiterbildung der Anordnung gemäß FIG.

1 dar, die zur Trägerrückgewinnung bei QAM-modulierten Signalen verwendet werden kann.

Sie unterscheidet sich von der Anordnung gemäß FIG. 3 dadurch, daß die Einheit zur Befreiung der von dem vorgeschalteten CORDIC-Koordinatortransformator gelieferten Phase $\varphi_k$ durch eine QAM-Nichtlinearitätseinheit QAM-NL realisiert ist. Das so erzeugte modulations-signalunabhängige Phasenfehlersignal $\psi_k$ wird anschließend - wie in FIG. 3 - auf den Multiplizierer MP2 gegeben und dort mit dem bewerteten Betragssignal $F(A_k)$ des CORDIC-Koordinatentransformators multipliziert.

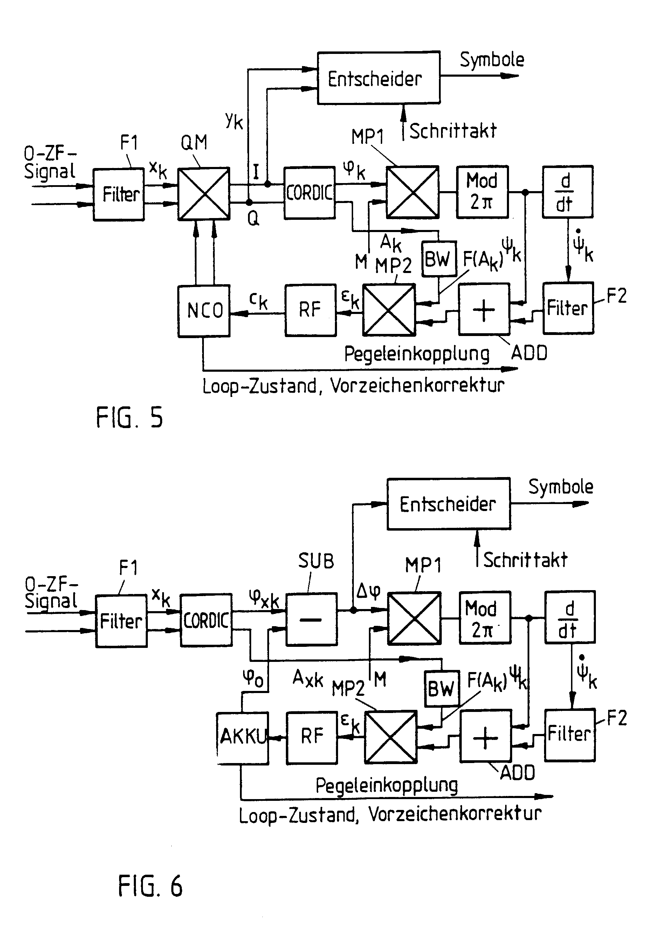

Die Anordnung zur Trägerrückgewinnung in FIG. 5 unterscheidet sich von der in FIG. 3 dadurch, daß der Regelkreis zusätzlich um eine Schaltung zur automatischen Frequenzkontrolle (AFC: $\underline{A}$utomatic-$\underline{F}$requency-$\underline{C}$ontrol) erweitert worden ist. Die Einheit besteht aus einen Zeitdifferenzierglied d/dt und einem nachgeschalteten Filter F2. Das modulationssignalunabhängige Phasenfehlersignal $\psi_k$ wird bei dieser AFC-Schaltung dem Zeitdifferenzierglied d/dt zugeführt, das die erste zeitliche Ableitung $\dot{\psi}_k$ dieses Signals erzeugt und dem Filter F2 zuführt. Die gefilterte erste zeitliche Ableitung $\dot{\psi}_k$ von $\psi_k$ wird anschließend einem Addierer ADD zugeführt und dort zu dem Phasenfehlersignal $\psi_k$ addiert. Das Summenausgangssignal des Addierers ADD wird anschließend zusammen mit dem bewerteten Betragssignal $F(A_k)$ des CORDIC-Transformators dem Multiplikator MP2 zugeführt, in dem aus diesen Signalen das Fehlersignal $\varepsilon_k$ abgeleitet wird.

Die Anordnung zur Trägerrückgewinnung in FIG. 6 unterscheidet sich von der Anordnung gemäß FIG. 2 dadurch, daß zum einen zusätzlich zur Kennzeichnung eines adaptiven Verhaltens der Regelschleife der in einer Bewertungseinheit BW bewertete Betrag $F(A_k)$ des gefilterten komplexen Basisbandsignals $x_k$ eingekoppelt wird und daß zum anderen die in FIG. 5 bereits beschriebene zusätzliche Schaltung (d/dt, F2) zur automatischen Frequenzkontrolle ("AFC-Regelkreis") vorgesehen ist. Als Koordinatentransformator ist auch hier, wie in FIG. 3-5, ein CORDIC-Transformator vorgesehen.

Ähnlich wie bei der Anordnung in FIG. 5 wird das modulationssignalunabhängige und von der Phasendifferenz $\Delta\varphi$ abgeleitete Phasenfehlersignal $\psi_k$ in der AFC-Schaltung zeitlich differenziert. Das gefilterte, zeitlich differenzierte Signal $\dot{\psi}_k$ wird anschließend in einem Addierer ADD mit dem Phasenfehlersignal $\psi_k$ addiert und das Summensignal des Addierers ADD wird auf den Multiplizierer MP2 gegeben, dem außerdem das durch die Bewertungseinheit BW bewertete Betragssignal $A_{xk}$ des gefilterten komplexen Basisbandsignals $x_k$ zugeleitet wird.

Das am Ausgang des Multiplizierers MP2 anliegende Fehlersignal $\varepsilon_k$ wird anschließend dem Regelfilter RF zugeleitet, der daraus das Regelsignal $c_k$ für den Phasenakkumulator AKKU erzeugt.

Mit Hilfe des zusätzlichen überlagerten AFC-Regelkreises der FIG. 5 und 6 kann der Fangbereich der Anordnung beträchtlich erweitert werden. Für Anwendungen der Verfahren zur Trägerrückgewinnung mit Hilfe digitaler Signalprozessoren ist der CORDIC-Loop in der Phasenebene (FIG. 2 bzw. FIG. 6) vorteilhaft, da die sin- und die cos-Tabelle im Referenzoszillator NCO eingespart werden können und stattdessen ein einfacher Phasenakkumulator verwendet werden kann.

Die rekursiven Strukturen des weiter oben beschriebenen COSTAS-Loops für komplexe Basisbandsignale und der nach der Erfindung arbeitenden rekursiven Strukturen mit oder ohne Pegeleinkopplung können in einem Ersatzschaltbild zu einer Grundstruktur einer digitalen $\underline{P}$hase-$\underline{L}$ocked $\underline{L}$oop (DPPL) zusammengefaßt werden, die aus den Funktionseinheiten Phasendetektor, Regelfilter und einem numerisch gesteuerten Oszillator zur Erzeugung des komplexen Referenzzeigers besteht.

Der Phasendetektor benutzt zur Bildung des Fehlersignals $\varepsilon_k$ im allgemeinen eine nichtlineare Operation. Die Eigenschaften des Phasendetektors werden mathematisch durch das Fehlersignal $\varepsilon_k$ beschrieben:

$$\text{CORDIC-Loop ohne Pegeleinkopplung: } \varepsilon_k = M\cdot(\varphi_R-\varphi_0), \qquad (11)$$

$$\text{CORDIC-Loop mit Pegeleinkopplung: } \varepsilon_k = A_k^n\cdot M\cdot(\varphi_R-\varphi_0). \qquad (12)$$

Die bei den COSTAS-Loop-Verfahren sinusförmige Phasendetektorkennlinie ist bei den CORDIC-Loop-Verfahren nach der Erfindung sägezahnförmig. Es ist besonders zu beachten, daß für MPSK-Verfahren die Phasendetektorkennlinie modulo$2\pi$/M periodisch ist. Die verschiedenen rekursiven Verfahren zur Trägerrückgewinnung unterscheiden sich im wesentlichen in der Form der Phasendetektorkennlinie (Linearitätsbereich) und der Phasendetektorkonstante $K_D$. Es gilt für den

$$\text{CORDIC-Loop ohne Pegeleinkopplung: } K_D = M, \qquad (13)$$

$$\text{CORDIC-Loop mit Pegeleinkopplung: } K_D = A_k^n \cdot M \cdot \tag{14}$$

Die Phasendetektorkonstante $K_D$ dieser Verfahren ist ohne Gedächtnis.

Die rekursiven Verfahren zur Trägerrückgewinnung schätzen sowohl die Trägerfrequenzlage des PSK-Signals als auch dessen genaue Phasenlage. Das Fehlersignal $\varepsilon_k$ ist sowohl von der Differenzfrequenz als auch der Differenzphase von Eingangssignal und Referenzsignal abhängig.

Die Erfindung ist nicht auf die beschriebenen Ausführungsbeispiele beschränkt, sondern kann vielmehr auch auf andere übertragen werden.

So ist es z.B. möglich, anstelle des CORDIC-Algorithmus andere Algorithmen zur Koordinatentransformation zu verwenden.

Ferner ist es möglich, die Ausführungsbeispiele z.B. in FIG. 2 und FIG. 6 für die Demodulation von zirkular-QAM-modulierten Signalen zu erweitern, indem das an dem einen Ausgang des CORDIC-Koordinatentransformators anliegende Betragssignal $A_{xk}$ zusätzlich dem Entscheider zugeführt wird.

**Patentansprüche**

1. Verfahren zur Trägerrückgewinnung bei der Demodulation von digital modulierten Signalen, <u>gekennzeichnet durch folgende Merkmale:</u>

   - das digital modulierte Signal wird in ein digitales, gefiltertes und mit einem Restträger zunächst unbekannter Frequenz $f_R$ und Phase $z_R$ behaftetes komplexes Basisbandsignal $x_k$ konvertiert;

   - das so erzeugte Basisbandsignal $x_k$ wird mit einem Referenzträger $v_k$ der Frequenz $f_o$ und der Phase $z_o$ komplex quadraturgemischt und die so erzeugten und in karthesischer Koordinatendarstellung vorliegenden In-Phase- und Quadratur-Signale I, Q werden einem Entscheider zur weiteren Auswertung zugeleitet;

   - in einem rekursiven Regelprozeß werden zunächst die In-Phase und Quadratur-Signale I, Q von der karthesischen Koordinatendarstellung in eine durch den Betrag $A_k$ und die Phase $z_k$ dieser Signale I, Q charakterisierte Polarkoordinatendarstellung transformiert, anschließend wird aus der so erzeugten Phase $z_k$ ein modulationssignalunabhängiges Phasenfehlersignal $w_k$ abgeleitet und schließlich wird aus diesem Phasenfehlersignal $w_k$ ein Regelsignal $c_k$ abgeleitet, mit dem Frequenz $f_o$ und Phase $z_o$ des Referenzträger $v_k$ sukzessive mit der Frequenz $f_R$ und Phase $z_R$ des Restträgers des Basisbandsignals $x_k$ in Übereinstimmung gebracht werden.

2. Verfahren zur Trägerrückgewinnung bei der Demodulation von digital modulierten Signalen, gekennzeichnet durch folgende Merkmale:

   - das digital modulierte Signal wird in ein digitales, gefiltertes und mit einem Restträger zunächst unbekannter Frequenz $f_R$ und Phase $z_R$ behaftetes komplexes Basisbandsignal $x_k$ konvertiert;

   - das in karthesischer Koordinatendarstellung vorliegende Basisbandsignal $x_k$ wird in eine durch den Betrag $A_{xk}$ und die Phase $z_{xk}$ des Basisbandsignals $x_k$ charakterisierte Polarkoordinatendarstellung transformiert, anschließend wird die so erzeugte Phase $z_k$ mit einer Referenzphase $z_o$ verglichen und die resultierende Phasendifferenz Dz zwischen beiden Phasen $z_{xk}$, $z_o$ gebildet, die einem Entscheider zur weiteren Verarbeitung zugeleitet wird;

   - in einem rekursiven Regelprozeß wird zunächst aus der Phasendifferenz Dz zwischen den beiden Phasen $z_{xk}$, $z_o$ ein modulationssignalunabhängiges Phasenfehlersignal $w_k$ abgeleitet und anschließend wird aus diesem Phasenfehlersignal $w_k$ ein Regelsignal abgeleitet, mit dem die Referenzphase $z_o$ sukzessive mit der Phase $z_{xk}$ des Basisbandsignals $x_k$ in Übereinstimmung gebracht wird.

3. Verfahren nach einem der Ansprüche 1 oder 2, dadurch gekennzeichnet, daß die Koordinatentransformation der In-Phase- und Quadratur-Signale I, Q bzw. des Basisbandsignals $x_k$ von der karthesischen Koordinatendarstellung in die Polarkoordinatendarstellung mit Hilfe des CORDIC-Algorithmus durchgeführt wird.

4. Verfahren nach einem der vorhergehenden Ansprüche, dadurch gekennzeichnet, daß das modulationssignalunabhängige Phasenfehlersignal $w_k$ zusammen mit einem oder mehreren anderen, aus dem Basisbandsignal $x_k$ oder den In-Phase- und Quadratur-Signalen I, Q oder dem modulations-signalunabhängigen Phasenfehlersignal $w_k$ selbst abgeleiteten zusätzlichen Bewertungssignal(en) zur Bildung eines Fehlersignals $e_k$ herangezogen wird, aus dem schließlich das Regelsignal für den Referenzträger $v_k$ bzw. für die Referenzphase $z_o$ abgeleitet wird.

5. Verfahren nach Anspruch 4, dadurch gekennzeichnet, daß zur Frequenzstabilisierung zusätzlich die erste zeitliche Ableitung $w_k$ des modulationssignalunabhängigen Phasenfehlersignals $w_k$ zunächst gebildet und anschließend gefiltert wird und daß das so erzeugte gefilterte Ableitungssignal als zusätzliches Bewertungssignal zur Bildung des Fehlersignals $e_k$ herangezogen wird.

6. Verfahren nach einem der Ansprüche 4 oder 5, dadurch gekennzeichnet, daß zur Erzielung eines adaptiven Regelverhaltens der Betrag $A_{xk}$ des Basisbandsignals $x_k$ bzw. der Betrag $A_k$ der In-Phase- und Quadratur-Signale I, Q als Bewertungssignal zur Bildung des Fehlersignals $e_k$ herangezogen wird.

7. Verfahren nach Anspruch 6, dadurch gekennzeichnet, daß das Fehlersignal nach der Formel

$$e_k = F(A_k)\ddot{E}w_k$$

bzw. nach der Formel

$$e_k = F(A_{xk})\ddot{E}w_k$$

gebildet wird mit $F(A_k)$ bzw. $F(A_{xk})$ gleich einer vorgegebenen Funktion von $A_k$ bzw. $A_{xk}$, vorzugsweise in Form

$$F(A_{xk}) = (A_{xk})^n$$

bzw.

$$F(A_R) = (A_R)^n$$

mit n=0,1 oder 2.

8. Verfahren nach einem der vorhergehenden Ansprüche, dadurch gekennzeichnet, daß bei MPSK-modulierten Signalen, mit M=2, 4, 8, 16, ...., das aus der Phasendifferenz Dz abgeleitete modulationssignalunabhängige Phasenfehlersignal $w_k$ gebildet wird durch Multiplikation der Phasendifferenz Dz mit M und einer nachfolgenden Modulo-2p-Kennlinie gemäß der Formel:

$$w_k = M(x_R\text{-}x_o)KT_A + M(z_{xk}\text{-}z_o)$$

mit $x_R = 2pf_R$, $x_o = 2pf_o$, k=1, 2, 3... und $T_A$ = Abtastintervall und daß bei QAM-modulierten Signalen das aus der Phasendifferenz Dz abgeleitete modulationsunabhängige Phasenfehlersignal $w_k$ durch eine vorgegebene QAM-Nichtlinearität gebildet wird .

9. Anordnung zur Trägerrückgewinnung bei der Demodulation von digital modulierten Signalen zum Ausführen des Verfahrens nach einem der Ansprüche 1 oder 3 bis 7, dadurch gekennzeichnet,

- daß ein komplexer Quadraturmischer (QM) vorgesehen ist;
- daß der komplexe Quadraturmischer (QM) eingangsseitig zum einen an ein Filter (F1) für das komplexe Basisbandsignal $x_k$ und zum anderen an den Ausgang eines in Frequenz $f_o$ und Phase $z_o$ steuerbaren Referenzoszillators (NCO) angeschlossen ist;
- daß der In-Phase- und der Quadratur-Ausgang des komplexen Quadraturmischers (QM) mit einem Entscheider verbunden ist;

- daß zur Durchführen des rekursiven Regelprozesses eine Regelschleife realisiert ist, indem zum einen der In-Phase- und der Quadratur-Ausgang des komplexen Quadraturmischers (QM) zusätzlich mit dem Eingang eines Koordinatentransformators (KT) zur Signaltransformation von einer karthesischen Koordinatendarstellung in eine durch Betrag $A_k$ und Phase $z_k$ charakterisierte Polarkoordinatendarstellung verbunden ist und zum anderen der die Phase $z_k$ führende Ausgang des Koordinatentransformators (KT) über eine Einheit (MP1, Mod 2p; QAM-NL) zur Befreiung der Phase $z_k$ von der Modulationssignalabhängigkeit sowie über einen nachgeschalteten Regelfilter (RF) mit dem Steuereingang des Referenzoszillators (NCO) verbunden ist.

10. Anordnung zur Trägerrückgewinnung bei der Demodulation digital modulierter Signale zum Ausführen des Verfahrens nach einem der Ansprüche 2 bis 7, dadurch gekennzeichnet,

- daß einem Filter (F1) für das komplexe Basisbandsignal ein Koordinatentransformator (KT) zur Signaltransformation von einer karthesischen Koordinatendarstellung in eine durch Betrag $A_{xk}$ und Phase $z_{xk}$ charakterisierte Polarkoordinaten-darstellung nachgeschaltet ist;
- daß der die Phase $z_{xk}$ führende Ausgang des Koordinatentransformators (KT) mit einem Eingang eines Subtrahieres (SUB) verbunden ist;
- daß der andere Eingang des Subtrahieres (SUB) mit dem Ausgang eines Phasenakkummulators (AKKU) verbunden ist und der Ausgang des Subtrahieres (SUB) mit einem Entscheider verbunden ist;
- daß zur Durchführung des rekursiven Regelprozesses eine Regelschleife realisiert ist, indem der Ausgang des Subtrahierers (SUB) zusätzlich über eine Einheit (MP1, Mod 2p; QAM-NL) zur Befreiung der am Ausgang des Subtrahierers (SUB) anliegenden Phasendifferenz Dz von der Modulationssignalabhängigkeit sowie über einen nachgeschalteten Regelfilter (RF) mit dem Eingang des Phasenakkumulators (AKKU) verbunden ist.

11. Anordnung nach einem der Ansprüche 9 oder 10, dadurch gekennzeichnet, daß der Koordinatentransformator (KT) nach dem CORDIC-Algorithmus arbeitet.

12. Anordnung nach einem der Ansprüche 9 bis 11, dadurch gekennzeichnet, daß die Regelschleife um eine Schaltung zur automatischen Frequenzkontrolle (d/dt, F2) erweitert ist.

13. Anordnung nach Anspruch 12, dadurch gekennzeichnet,

- daß die Schaltung zur automatischen Frequenzkontrolle aus einem Zeitdifferenzierglied (d/dt) und einem diesem Glied nachgeschalteten weiteren Filter (F2) besteht;
- daß ein Addierer (ADD) ausgangsseitig mit dem Regelfilter (RF) und eingangsseitig zum einen mit dem Ausgang des weiteren Filters (F2) und zum andern mit dem Ausgang der Einheit (MP1, Mod 2p; QAM-NL) zur Befreiung der Phase $z_k$ bzw. der Phasendifferenz Dz von der Modulationssignalabhängigkeit verbunden ist, wobei letzterer Ausgang zusätzlich mit dem Eingang des Zeitdifferenzgliedes (d/dt) verbunden ist.

14. Anordnung nach einem der Ansprüche 9 bis 13, dadurch gekennzeichnet, daß zur Erzielung eines adaptiven Regelverhaltens der Regelschleife der den Betrag $A_k$ der In-Phase- und Quadratur-Signale bzw. $A_{xk}$ des komplexen Basisbandsignals führende Ausgang des Koordinatentransformators (KT) über eine Bewertungseinheit (BW) mit dem einen Eingang eines Multiplizierer (MP2) verbunden ist und daß der Multiplikator (MP2) ausgangsseitig mit dem Regelfilter (RF) verbunden ist und mit dem anderen Eingang an dem Ausgang des Addierers (ADD) oder der Einheit (MP1, Mod 2p; QAM-NL) zur Befreiung der Phase $z_k$ bzw. der Phasendifferenz Dz von der Modulationssignalabhängigkeit angeschlossen ist.

15. Anordnung nach einem der Ansprüche 9 bis 14, dadurch gekennzeichnet, daß für die Demodulation von MPSK-modulierten Signalen, mit M=2, 4, 8, 16,...., die Einheit zur Befreiung der Phase $z_k$ bzw. der Phasendifferenz Dz von der Modulationssignalabhängigkeit aus einem weiteren Multiplizierer (MP1) und einer nachgeschalteten Einheit zur Erzeugung der Modulo-2p-Kennlinie (Mod 2p) besteht und daß der Multiplizierer (MP1) eingangsseitig zum einen an den die Phase $z_k$ führenden Ausgang des Koordinatentransformators (KT) bzw. an den Ausgang des Subtrahierers (SUB) angeschlossen ist und zum anderen mit einer den Multiplikationsfaktor M erzeugenden Einheit verbunden ist.

16. Anordnung nach Anspruch 15, dadurch gekennzeichnet, daß der weitere Multiplizierer (MP2) und die Einheit zur Erzeugung der Modulo-2p-Kennlinie mit einem digitalen Signalprozessor realisiert sind, bei dem bei entsprechender Normierung des CORDIC-Algorithmus und des Referenzoszillators (NCO) bzw. des Phasenakkumulators (AKKU) die Multiplikation mit M durch eine Shift-Operation realisiert wird und die Darstellung der Modulo-2p-Kennlinie durch die Zweier-Komplementdarstellung des Zahlenbereichs dargestellt wird.

17. Anordnung nach einem der Ansprüche 9 bis 14, dadurch gekennzeichnet, daß für die Demodulation von QAM-modulierten Signalen die Einheit zur Befreiung der Phase $z_k$ bzw. der Phasendifferenz Dz von der Modulationsabhängigkeit aus einer QAM-Nichtlinearitätseinheit (QAM-NL) besteht, daß die QAM-Nichtlinearitätseinheit (QAM-NL) eingangsseitig an den die Phase $z_k$ der In-Phase- und Quadratur-Signale führenden Ausgang des Koordinatentransformators (KT) bzw. an den Ausgang des Subtrahierers (SUB) angeschlossen ist.

18. Demodulator insbesondere für den Kurzwellenbereich, mit einer Anordnung nach einem der Ansprüche 9 bis 17.

19. Empfänger insbesondere für den Kurzwellenbereich, mit einem Demodulator nach Anspruch 18 oder mit einer Anordnung nach einem der Ansprüche 9 bis 17.

**Claims**

1. Method for carrier recovery during the demodulation of digitally modulated signals, characterised by the following features:

   - the digitally modulated signal is converted into a digital filtered complex baseband signal $x_k$ attached to a residual carrier of initially unknown frequency $f_R$ and phase $Z_R$,

   - the thus-produced baseband signal $x_k$ is complexly mixed in quadrature with a reference carrier $v_k$ of the frequency $f_o$ and the phase $z_o$ and the in-phase signals I and the quadrature signals Q, which are thus produced and present in Cartesian co-ordinate presentation, are conducted to a decider for further evaluation and

   - the in-phase signals I and the quadrature signals Q are initially transformed in a recursive regulating process from the Cartesian co-ordinate presentation into a polar co-ordinating presentation characterised by the amplitude $A_k$ and the phase $z_k$ of these signals I and Q, a phase error signal $w_k$ independent of modulation signal is derived subsequently from the phase $z_k$ thus produced and a regulating signal $c_k$ is finally derived from this phase error signal $w_k$, by which regulating signal the frequency $f_o$ and the phase $z_o$ of the reference carrier $v_k$ are brought successively into agreement with the frequency $f_R$ and the phase $z_R$ of the residual carrier of the baseband signal $x_k$.

2. Method for carrier recovery during the demodulation of digitally modulated signals, characterised by the following features:

   - the digitally modulated signal is converted into a digital filtered complex baseband signal $x_k$ attached to a residual carrier of initially unknown frequency $f_R$ and phase $Z_R$,

   - the baseband signal $x_k$ present in Cartesian co-ordinate presentation is transformed into a polar co-ordinating presentation characterised by the amplitude $A_{xk}$ and the phase $z_{xk}$ of the baseband signal $x_k$, the phase $Z_k$ thus produced is subsequently compared with a reference phase $z_o$ and the resultant phase difference $D_z$ between both the phases $z_{xk}$ and $z_o$ is formed and conducted to a decider for further processing and

   - a phase error signal $w_k$ independent of modulation signal is derived initially in a recursive regulating process from the phase difference $D_z$ between both the phases $z_{xk}$ and $z_o$ and a regulating signal is subsequently derived from this phase error signal $W_k$, by which regulating signal the reference phase $z_o$ is brought successively into agreement with the phase $z_{xk}$ of the baseband signal $x_k$.

3. Method according to one of the claims 1 and 2, characterised thereby, that the co-ordinate transformation of the in-phase signals I and the quadrature signals Q or of the baseband signal $x_k$ from the Cartesian co-ordinate presentation into the polar co-ordinate presentation is performed with the aid of the CORDIC algorithm.

4. Method according to one of the preceding claims, characterised thereby, that the phase error signal $w_k$ independent of modulation signal together with one or more other additional weighting signals derived from the baseband signal $x_k$ or the in-phase signals I and the quadrature signals Q or the phase error signal $w_k$ independent of modulation signal itself are drawn on for the formation of an error signal $e_k$, from which the regulating signal for the reference

carrier $v_k$ or for the reference phase $z_o$ is finally derived.

5. Method according to claim 4, characterised thereby, that for frequency stabilisation, the first time derivative $w_k$ of the phase error signal $w_k$ independent of modulation signal is additionally formed initially and filtered subsequently and the filtered derivative signal thus produced is drawn on as additional weighting signal for the formation of the error signal $e_k$.

6. Method according to claims 4 and 5, characterised thereby, that for the achievement of an adaptive regulating behaviour, the amplitude $A_{xk}$ of the baseband signal $x_k$ or the amplitude $A_k$ of the in-phase signals I and the quadrature signals Q is drawn on as weighting signal for the formation of the error signal $e_k$.

7. Method according to claim 6, characterised thereby, that the error signal is formed according to the formula

$$e_k = F(A_k) \ddot{E} w_k$$

or according to the formula

$$e_k = F(A_{xk}) \ddot{E} w_k$$

wherein $F(A_k)$ or $F(A_{xk})$ is equal to a given function of $A_k$ or $A_{xk}$, respectively, in the form of

$$F(A_{xk}) = (A_{xk})^n$$

or

$$F(A_R) = (A_R)^n$$

wherein n is equal to 0, 1 or 2.

8. Method according to one of the preceding claims, characterised thereby, that in the case of MPSK-modulated signals, wherein M = 2, 4, 8, 16..., the phase error signal $w_k$ independent of modulation signal and derived from the phase difference D2 is formed by multiplication of the phase difference by M and a following module-2p characteristic according to the formula:

$$w_k = M(x_R - x_o)KT_A + M(z_{xk} - z_o)$$

wherein $x_R = 2pf_R$, $x_o = 2pf_o$, k = 1, 2, 3 ... and $T_A$ = scanning interval and that, in the case of QAM-modulated signals, the phase error signal $w_k$ independent of modulation signal and derived from the phase difference D2 is formed by a given QAM-non-linearity.

9. Arrangement for the carrier recovery during the demodulation of digitally modulated signals for the performance of the method according to one of the claims 1 or 3 to 7, characterised thereby,

- that a complex quadrature mixer (QM) is provided,
- that the complex quadrature mixer (QM) is connected at the input on the one hand to a filter (F1) for the complex baseband signal $x_k$ and on the other hand to the output of a reference oscillator (NCO) controllable in frequency $f_o$ and phase $z_o$,
- that the in-phase output and the quadrature output of the complex quadrature mixer (QM) are connected with a decision element,
- that a regulating loop is realised for the performance of the recursive regulating process in that, on the one hand, the in-phase output and the quadrature output of the complex quadrature mixer (QM) are additionally connected with the input of a co-ordinate transformer (KT) for the signal transformation form a Cartesian co-ordinate presentation into a polar co-ordinate presentation characterised by amplitude $A_k$ and phase $Z_k$ and

on the other hand the output, which carries the phase $Z_k$, of the co-ordinate transformer (KT) is connected with the control input of the reference oscillator (NCO) by way of a unit (MP1, Mod 2p; QAM-NL) for freeing the phase $Z_k$ from the dependence on the modulation signal as well as by way of a regulating filter (RF) connected therebehind.

10. Arrangement for the carrier recovery during the demodulation of digitally modulated signals for the performance of the method according to one of the claims 2 to 7, characterised thereby,

- that a co-ordinate transformer (KT) for the signal transformation form a Cartesian co-ordinate presentation into a polar co-ordinate presentation characterised by amplitude $A_{xk}$ and phase $z_{xk}$ is connected behind a filter (F1) for the complex baseband signal ($x_k$),

- that the output, which carries the phase $Z_{xk}$, of the co-ordinate transformer (KT) is connected with one input of a subtractor (SUB),

- that the other input of the subtractor (SUB) is connected with the output of a phase accumulator (AKKU) and the output of the subtractor (SUB) is connected with a decision element,

- that a regulating loop is realised for the performance of the recursive regulating process in that the output of the subtractor (SUB) is connected with the input of the phase accumulator (AKKU) additionally by way of a unit (MP1, Mod 2p; QAM-NL) for freeing the phase difference D2 present at the output of the subtractor (SUB) from the dependence on the modulation signal as well as by way of a regulating filter (RF) connected therebehind.

11. Arrangement according to one of the claims 9 and 10, characterised thereby, that the co-ordinate transformer (KT) operates by the CORDIC algorithm.

12. Arrangement according to one of the claims 9 to 12, characterised thereby, that the regulating loop is enlarged by a circuit for automatic frequency control (d/dt, F2).

13. Arrangement according to claim 12, characterised thereby,

- that the circuit for the automatic frequency control consists of a time differentiating member (d/dt) and a further filter (F2) connected behind this member and

- that an adder (ADD) is connected at the output with the regulating filter (RF) and at the input on the one hand with the output of the further filter (F2) and on the other hand with the output of the input of the unit (MP1, Mod 2p; QAM-NL) for freeing the phase $z_k$ or the phase difference $D_z$ from the dependence on the modulation signal, wherein the latter output is additionally connected with the input of the time differentiating member (d/dt).

14. Arrangement according to one of the claims 9 to 13, characterised thereby, that for achieving an adaptive regulating behaviour of the regulating loop, that output of the co-ordinate transformer (KT), which carries the amplitude $A_k$ of the in-phase and quadrature signals or $A_{xk}$ of the complex baseband signal, is connected by way of a weighting unit (BW) with the one input of a multiplier (MP2) and that the multiplier (MP2) is connected at the output with the regulating filter (RF) and by the other input to the output of the adder (ADD) or of the unit (MP1, Mod 2p; QAM-NL) for freeing the phase $Z_k$ or the phase difference D2 from the dependence on the modulation signal.

15. Arrangement according to one of the claims 9 to 14, characterised thereby, that for the demodulation of MPSK-modulated signals, wherein M = 2, 4, 8, 16..., the unit for freeing the phase $Z_k$ or the phase difference D2 from the dependence on the modulation signal consists of a further multiplier (MP1) and a unit connected therebehind for production of the module-2p characteristic (Mod 2p) and that the multiplier (MP1) is connected at the input on the one hand to that output of the co-ordinate transformer (KT), which carries the phase $Z_k$, or to the output of the subtractor (SUB) and on the other hand with a unit producing the multiplication factor M.

16. Arrangement according to claim 15, characterised thereby, that the further multiplier (MP2) and the unit for production of the module-2p characteristic are realised by a digital signal processor, in which the multiplication by M is realised by a shift operation with appropriate normalisation of the CORDIC algorithm or of the reference oscillator (NCO) or of the phase accumulator (AKKU) and the presentation of the module-2p characteristic is represented by the complement-of-2 representation of the numerical range.

17. Arrangement according to one of the claims 9 to 14, characterised thereby, that for the demodulation of QAM-modulated signals, the unit for freeing the phase $Z_k$ or the phase difference D2 from the dependence on the modulation signal consists of a QAM non-linearity unit (QAM-NL), that the QAM non-linearity unit (QAM-NL) is connected at the input to that output of the co-ordinate transformer (KT), which carries the phase $Z_k$ of the in-phase and quadrature signals, or to the output of the subtractor (SUB).

18. Demodulator, especially for the short-wave range, with an arrangement according to one of the claims 9 to 17.

19. Receiver, especially for the short-wave range, with a demodulator according to claim 18 or with an arrangement according to one of the claims 9 to 17.

## Revendications

1. Procédé de récupération de porteuse dans le cas de la démodulation de signaux modulés numériques, caractérisé par les caractéristiques suivantes :

   - le signal modulé numérique est converti en un signal en bande de base $x_k$ filtré, numérique et comportant une porteuse résiduelle tout d'abord de fréquence $f_R$ et de phase $z_R$ inconnues ;
   - le signal en bande de base $x_k$ ainsi généré est mélangé en quadrature de facon complexe avec une porteuse de référence $v_k$ de fréquence $f_o$ et de phase $z_o$ et les signaux en phase et en quadrature I, Q ainsi générés et existants en représentation de coordonnées cartésiennes sont appliqués à un circuit de décision en vue d'une autre évaluation ;
   - au cours d'un processus de régulation récurrent, les signaux en phase et en quadrature I, Q sont tout d'abord transformés de la représentation en coordonnées cartésiennes en une représentation en coordonnées polaires caractérisée par l'amplitude $A_k$ et la phase $z_k$ de ces signaux I, Q, ensuite, à partir de la phase ainsi générée $z_k$, est extrait un signal d'erreur de phase $w_k$ indépendant du signal de modulation et enfin, à partir de ce signal d'erreur de phase $w_k$, est extrait un signal de régulation $c_k$, la fréquence $f_o$ et la phase $z_o$ de la porteuse de référence $v_k$ étant successivement amenées en concordance avec la fréquence $f_R$ et la phase $z_R$ de la porteuse résiduelle du signal en bande de base $x_k$.

2. Procédé de récupération de porteuse dans le cas de la démodulation de signaux modulés numériques, caractérisé par les caractéristiques suivantes :

   - le signal modulé numérique est converti en un signal en bande de base complexe $x_k$ filtré, numérique et comportant une porteuse résiduelle tout d'abord de fréquence $f_R$ et de phase $z_R$ inconnues ;
   - le signal en bande de base $x_k$ existant en représentation de coordonnées cartésiennes est transformé en une représentation en coordonnées polaires caractérisée par l'amplitude $A_{xk}$ et la phase $z_{xk}$ du signal en bande de base $x_k$, ensuite, la phase ainsi générée $z_k$ est comparée à une phase de référence $z_o$ et la différence de phase résultante Dz entre les deux phases $z_{xk}$, $z_o$ est formée, qui est appliquée à un circuit de décision en vue d'un autre traitement ;
   - au cours d'un processus de régulation récurrent, tout d'abord à partir de la différence de phase Dz entre les deux phases $z_{xk}$, $z_o$, est extrait un signal d'erreur de phase $w_k$, indépendant du signal de modulation et ensuite, à partir de ce signal d'erreur de phase $w_k$, un signal de régulation est extrait, à l'aide duquel la phase de référence $z_o$ est amenée successivement en concordance avec la phase $z_{xk}$ du signal en bande de base $x_k$.

3. Procédé selon l'une des revendications 1 ou 2, caractérisé en ce que la transformation de coordonnées des signaux en phase et en quadrature I, Q ou du signal en bande de base $x_k$ est effectuée de la représentation en coordonnées cartésiennes en représentation en coordonnées polaires à l'aide de l'algorithme CORDIC.

4. Procédé selon l'une quelconque des revendications précédentes, caractérisé en ce que le signal d'erreur de phase $w_k$, indépendant du signal de modulation conjointement avec l'un ou plusieurs autres, est obtenu à partir du signal en bande de base $x_k$ ou des signaux en phase et en quadrature I, Q ou des signaux d'évaluation supplémentaires eux-mêmes obtenus du signal d'erreur de phase $w_k$ indépendant du signal de modulation, en vue de la formation d'un signal d'erreur $e_k$, à partir duquel enfin le signal de régulation est obtenu pour la porteuse de référence $v_k$, ou pour la phase de référence $z_o$.

**5.** Procédé selon la revendication 4, caractérisé en ce qu'en vue de la stabilisation en fréquence, de plus la première dérivée par rapport au temps $w_k$ du signal d'erreur de phase $w_k$ indépendant du signal de modulation est tout d'abord formée et ensuite est filtrée et en ce que le signal de dérivée filtré ainsi généré est utilisé en tant que signal d'évaluation supplémentaire en vue de la formation du signal d'erreur $e_k$.

**6.** Procédé selon l'une des revendications 4 ou 5, caractérisé en ce qu'en vue de l'obtention d'un comportement de régulation adaptatif, l'amplitude $A_{xk}$ du signal en bande de base $x_k$ ou l'amplitude $A_k$ des signaux en phase et en quadrature I, Q est utilisée en tant que signal d'évaluation en vue de la formation du signal d'erreur $e_k$.

**7.** Procédé selon la revendication 6, caractérisé en ce que le signal d'erreur est formé selon la formule

$$e_k = F(A_k)\ddot{E}w_k$$

ou selon la formule

$$e_k = F(A_{xk})\ddot{E}w_k$$

avec $F(A_k)$ ou $F(A_{xk})$ égal à une fonction prédéterminée de $A_k$ ou de $A_{xk}$, de préférence sous la forme

$$F(A_{xk}) = (A_{xk})^n$$

ou

$$F(A_R) = (A_R)^n$$

avec $n = 0$, 1 ou 2.

**8.** Procédé selon l'une quelconque des revendications précédentes, caractérisé en ce que, dans le cas de signaux modulés MPSK, avec $M = 2$, 4, 8, 16..., le signal d'erreur de phase $w_k$ indépendant du signal de modulation extrait de la différence de phase Dz est formé par multiplication de la différence de phase Dz par M et d'une caractéristique modulo-2p suivante :

$$w_k = M(x_R\text{-}x_0)KT_A + M(z_{xk}\text{-}z_o)$$

avec $x_R = 2pf_R$, $x_o = 2pf_o$, $k = 1$, 2, 3..., et $T_A =$ intervalle d'analyse et en ce que, dans le cas de signaux modulés QAM, le signal d'erreur de phase $w_k$, indépendant du signal de modulation dérivé à partir de la différence de phase Dz, est formé par une non-linéarité QAM prescrite.

**9.** Dispositif de récupération de porteuse dans le cas de la démodulation de signaux modulés numériques en vue de la mise en oeuvre du procédé selon l'une quelconque des revendications 1 ou 3 à 7, caractérisé

- en ce qu'un mélangeur en quadrature complexe (QM) est prévu ;
- en ce que le mélangeur en quadrature complexe (QM) est relié, côté entrée, d'une part à un filtre (F1) pour le signal en bande de base complexe $x_k$, d'autre part à la sortie d'un oscillateur de référence commandé en fréquence $f_o$ et en phase $z_o$ (NCO) ;
- en ce que la sortie en phase et la sortie en quadrature du mélangeur en quadrature complexe (QM) est reliée à un circuit de décision ;
- en ce qu'en vue de la mise en oeuvre du processus de régulation récurrent, est réalisée une boucle de régulation, dans laquelle, d'une part, la sortie en phase et la sortie en quadrature du mélangeur en quadrature complexe (QM) est reliée à l'entrée d'un transformateur de coordonnées (KT) en vue de la transformation du signal d'une représentation en coordonnées cartésiennes en une représentation en coordonnées polaires caractérisée par l'amplitude $A_k$ et la phase $z_k$, et d'autre part, la sortie du transformateur de coordonnées (KT) conduisant la phase $z_k$ est reliée à une unité (MP1, Mod 2p ; QAM-NL) en vue de libérer la phase $z_k$ de la

dépendance du signal de modulation ainsi que par l'intermédiaire d'un filtre de régulation (RF) disposé en aval, avec l'entrée de commande de l'oscillateur de référence (NCO).

10. Dispositif de récupération de porteuse dans le cas de la démodulation de signaux modulés numériques en vue de la mise en oeuvre du procédé selon l'une quelconque des revendications 2 à 7, caractérisé

   - en ce qu'en aval d'un filtre (F1) pour le signal en bande de base complexe, est disposé un transformateur de coordonnées (KT) en vue de la transformation de signaux d'une représentation en coordonnées cartésiennes en une représentation en coordonnées polaires caractérisée par l'amplitude $A_{xk}$ et la phase $z_{xk}$ ;
   - en ce que la sortie du transformateur de coordonnées (KT) conduisant la phase $z_{xk}$ est reliée à une entrée d'un soustracteur (SUB) ;
   - en ce que l'autre entrée du soustracteur (SUB) est reliée à la sortie d'un accumulateur de phase (AKKU) et la sortie du soustracteur (SUB) est reliée à un circuit de décision ;
   - en ce qu'en vue de la mise en oeuvre du processus de régulation récurrent, est réalisée une boucle de régulation, dans laquelle la sortie du soustracteur (SUB) est en outre reliée par l'intermédiaire d'une unité (MP1, Mod 2p ; QAM-NL) en vue de la libération de la différence de phase Dz apparaissant à la sortie du soustracteur (SUB) de la dépendance du signal de modulation ainsi que par l'intermédiaire d'un filtre de régulation (RF) disposé en aval avec l'entrée de l'accumulateur de phase (AKKU).

11. Dispositif selon l'une des revendications 9 ou 10, caractérisé en ce que le transformateur de coordonnées (KT) travaille selon l'algorithme CORDIC.

12. Dispositif selon l'une quelconque des revendications 9 à 11, caractérisé en ce que la boucle de régulation est élargie à un circuit de contrôle automatique de fréquence (d/dt, F2).

13. Dispositif selon la revendication 12, caractérisé

   - en ce que le circuit de contrôle automatique de fréquence se compose d'un élément différentiateur de temps (d/dt) et d'un autre filtre (F2) disposé en aval de cet élément;
   - en ce qu'un additionneur (ADD) est relié, côté sortie, au filtre de régulation (RF) et, côté entrée, d'une part à la sortie de l'autre filtre (F2) et d'autre part à la sortie de l'unité (MP1, Mod 2p ; QAM-NL) en vue de la libération de la phase $z_k$ ou de la différence de phase Dz de la dépendance du signal de modulation, cette dernière sortie étant en outre reliée à l'entrée de l'élément différentiateur de temps (d/dt).

14. Dispositif selon l'une quelconque des revendications 9 à 13, caractérisé en ce qu'en vue de l'obtention d'un comportement de régulation adaptatif de la boucle de régulation, la sortie du transformateur de coordonnées (KT) conduisant l'amplitude $A_k$ des signaux en phase et en quadrature ou $A_{xk}$ du signal en bande de base complexe, est reliée, par l'intermédiaire d'une unité d'évaluation (BW), à la première entrée d'un multiplicateur (MP2) et en ce que le multiplicateur (MP2) est relié, côté sortie, au filtre de régulation (RF) et par l'autre entrée à la sortie de l'additionneur (ADD) ou à l'unité (MP1, Mod 2p; QAM-NL) en vue de la libération de la phase $z_k$ ou de la différence de phase Dz de la dépendance du signal de modulation.

15. Dispositif selon l'une quelconque des revendications 9 à 14, caractérisé en ce que, pour la démodulation de signaux modulés MPSK, avec M = 2, 4, 8, 16..., l'unité pour la libération de la phase $z_k$ ou de la différence de phase Dz de la dépendance du signal de modulation, se compose d'un autre multiplicateur (MP1) et d'une unité placée en aval en vue de la génération de la caractéristique modulo-2p (Mod 2p) et en ce que le multiplicateur (MP1) est relié, côté entrée, d'une part à la sortie conduisant la phase $z_k$ du transformateur de coordonnées (KT) ou à la sortie du soustracteur (SUB), et d'autre part est relié à une unité générant le facteur de multiplication M.

16. Dispositif selon la revendication 15, caractérisé en ce que l'autre multiplicateur (MP2) et l'unité en vue de la génération de la caractéristique Modulo-2p sont réalisés avec un processeur de signaux numériques, dans lequel, lors de la normalisation correspondante de l'algorithme CORDIC et de l'oscillateur de référence (NCO) ou de l'accumulateur de phase (AKKU), la multiplication par M est obtenue par une opération de décalage et la représentation de la caractéristique modulo-2p est réalisée par la représentation du complément à deux de la plage numérique.

17. Dispositif selon l'une quelconque des revendications 9 à 14, caractérisé en ce que, pour la démodulation de signaux modulés QAM, l'unité de libération de la phase $z_k$ ou de la différence de phase Dz de la dépendance du signal de modulation se compose d'une unité de non-linéarité QAM (QAM-NL), en ce que l'unité de non-linéarité QAM (QAM-NL) est reliée, côté entrée, à la sortie conduisant la phase $z_k$ des signaux en phase et en quadrature du transformateur de coordonnées (KT) ou à la sortie du soustracteur (SUB).

18. Démodulateur, en particulier pour la gamme des ondes courtes, équipé d'un dispositif selon l'une quelconque des revendications 9 à 17.

19. Récepteur, en particulier pour la gamme des ondes courtes, équipé d'un démodulateur selon la revendication 18 ou d'un dispositif selon l'une quelconque des revendications 9 à 17.

## FIG. 1

O-ZF-Signal → **Filter** (F1) → $x_k$ Re / Im → **QM** → I / Q

$y_k$ → **Entscheider** → Symbole

↑ Schrittakt

I → **KT** → $\varphi_k$ → **MP1** (⊗) → **Mod 2π** → $\psi_k$

M → MP1

$v_k$ → **NCO** ← $c_k$ ← **RF** ← $\psi_k$

Loop-Zustand, Vorzeichenkorrektur

## FIG. 2

O-ZF-Signal → **Filter** (F1) → $x_k$ Re / Im → **KT** → $\varphi_{xk}$ → **SUB** (−) → $\Delta\varphi$

$\Delta\varphi$ → **Entscheider** → Symbole

↑ Schrittakt

$\Delta\varphi$ → **MP1** (⊗) → **Mod 2π** → $\psi_k$

M → MP1

$\varphi_0$ → SUB

**AKKU** ← **RF** ← $\psi_k$

AKKU → $\varphi_0$

Loop-Zustand, Vorzeichenkorrektur

FIG. 3

FIG. 4

FIG. 5

FIG. 6